# EUROPÄISCHE PATENTANMELDUNG

(11) **EP 4 306 389 A1**
(43) Veröffentlichungstag der Anmeldung: **17.01.2024**
(21) Anmeldenummer: 22185035.7
(22) Anmeldetag: 14.07.2022
(51) Int. Cl.: B62D 25/00, B62D 29/00

(54) **DÄMMELEMENT**

(71) Anmelder: Sika Technology AG, 6340 Baar (CH)
(72) Erfinder: RICHARDSON, Brett, Rochester, 48307 (US)
(74) Vertreter: Sika Patent Attorneys

(57) **Zusammenfassung**

Ein Dämmelement zur Dämmung eines Strukturelementes in einem Fahrzeug umfasst einen Träger, welcher eine Zwischenwand, eine erste Seitenwand und eine zweite Seitenwand hat, wobei sich die Wände des Trägers entlang einer gemeinsamen Längsachse erstrecken, und wobei der Träger in einer Ebene senkrecht zur Längsachse einen H-förmigen Querschnitt hat, bei welchem die ersten Seitenwand und die zweite Seitenwand jeweils an einem Ende der Zwischenwand angeordnet sind. Das Dämmelement umfasst weiter ein expandierbares Material, welches sowohl zwischen den Seitenwänden als auch beidseitig der Zwischenwand angeordnet ist, und zumindest ein Fixierungselement, welches sowohl den Träger als auch das expandierbare Material durchdringt und im Wesentlichen senkrecht zur Zwischenwand des Trägers angeordnet ist.

## Beschreibung

Die Erfindung betrifft ein Dämmelement zur Dämmung eines Strukturelementes in einem Kraftfahrzeug, sowie ein Verfahren zur Herstellung solcher Dämmelemente.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

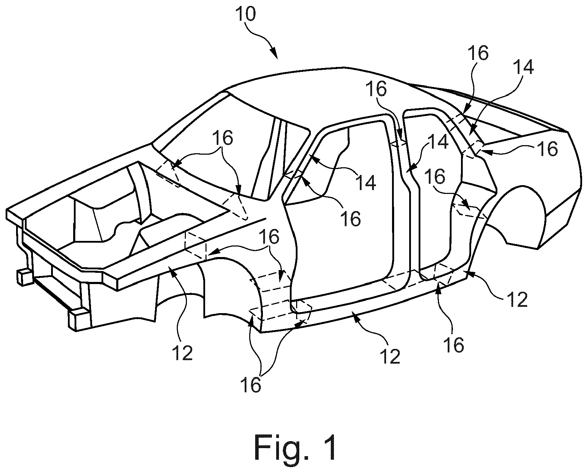

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt. Üblicherweise werden diese Elemente 16 durch ein Zweikomponenten-Spritzgussverfahren hergestellt.

Nachteilig an den bisher bekannten Abdichtungs- und/oder Verstärkungselementen ist es, dass für jede Karosserieform und für jeden Hohlraum einer Karosserie ein individuell angepasstes Element hergestellt werden muss, sodass für jede Anwendung neue Spritzgusswerkzeuge notwendig werden. Dies führt zu hohen Entwicklungs- und Herstellungskosten und ist insbesondere bei kleineren Fahrzeugserien nachteilhaft.

Aus diesem Grund wurden bereits Abdichtungselemente vorgeschlagen, welche nicht durch ein Zweikomponenten-Spritzgussverfahren hergestellt werden. Aus WO 2016/176459 A1 ist beispielsweise ein Verfahren bekannt, bei welchem aktivierbares Material auf einen Träger extrudiert wird. Nachteilig an dieser Lösung ist es jedoch, dass das aktivierbare Material oftmals in unerwünschter Weise expandiert bzw. nicht zielgerichtet expandiert, und dass eine Verbindung zwischen Träger und aktivierbarem Material oftmals ungenügend stark ausgebildet ist.

Es ist daher eine Aufgabe der vorliegenden Erfindung, ein verbessertes Dämmelement zur Dämmung eines Strukturelementes in einem Kraftfahrzeug zur Verfügung zu stellen, welches die Nachteile des Standes der Technik vermeidet. Das Dämmelement soll insbesondere wirtschaftliche Vorteile bei Kleinserien mit sich bringen und insgesamt einen Entwicklungs- und Herstellungsaufwand der Dämmelemente reduzieren, sowie eine zielgerichtete und effiziente Expansion des aktivierbaren Materials erlauben.

Diese Aufgabe wird zunächst gelöst durch ein Dämmelement zur Dämmung eines Strukturelementes in einem Kraftfahrzeug, das Dämmelement umfassend: einen Träger, welcher eine Zwischenwand, eine erste Seitenwand und eine zweite Seitenwand hat, wobei sich die Wände des Trägers entlang einer gemeinsamen Längsachse erstrecken, und wobei der Träger in einer Ebene senkrecht zur Längsachse einen H-förmigen Querschnitt hat, bei welchem die ersten Seitenwand und die zweite Seitenwand jeweils an einem Ende der Zwischenwand angeordnet sind; ein expandierbares Material, welches sowohl zwischen den Seitenwänden als auch beidseitig der Zwischenwand angeordnet ist; und zumindest ein Fixierungselement, welches sowohl den Träger als auch das expandierbare Material durchdringt und im Wesentlichen senkrecht zur Zwischenwand des Trägers angeordnet ist.

Ein Kerngedanke der vorliegenden Erfindung besteht insbesondere darin, dass durch die Formgebung des Trägers einerseits das expandierbare Material besser mit dem Träger verbunden ist, indem die Seitenwände ein seitliches Abrutschen des expandierbaren Materiales während der Expansion wirksam verhindern. Andererseits wird durch diese Formgebung auch eine Expansionsrichtung genauer definiert, indem die Seitenwände das expandierbare Material bei der Expansion in eine gewünschte Richtung lenken.

Ein weiterer Vorteil aus der hier vorgeschlagenen Formgebung des Trägers ist es, dass die Seitenwände das expandierbare Material mechanisch schützen. Dies ist insbesondere bei einem Transport, einer Lagerung, oder einer Installation der Dämmelemente von Bedeutung.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Dämmung eines Strukturelementes. Diese verschiedenen Eigenschaften eines solchen Dämmelementes können dabei einzeln oder aber in Kombination miteinander auftreten.

### Dämmelement

In einer beispielhaften Ausführungsform hat die Zwischenwand zumindest eine Durchdringung.

Eine solche Ausgestaltung der Zwischenwand hat den Vorteil, dass dadurch eine Verbindung zwischen Träger und expandierbarem Material weiter verbessert wird, indem das expandierbare Material zu beiden Seiten der Zwischenwand durch die Durchdringung hindurch miteinander verbunden ist. Dadurch entsteht eine mechanische Verzahnung zwischen expandierbarem Material und Träger, sodass sich das expandierbare Material weniger gut vom Träger ablösen kann.

In einer beispielhaften Weiterbildung hat die Zwischenwand mehrere Durchdringungen, welche insbesondere in regelmässigen Abständen in Richtung der Längsachse voneinander beabstandet sind.

In einer beispielhaften Weiterbildung ist die zumindest eine Durchdringung kreisförmig, oval oder elliptisch.

In einer beispielhaften Weiterbildung sind die mehreren Durchdringungen entlang der Längsachse im Wesentlichen mittig auf der Zwischenwand angeordnet.

In einer beispielhaften Ausführungsform sind die Seitenwände spiegelsymmetrisch zueinander ausgebildet.

Eine solche Ausgestaltung der Seitenwände hat den Vorteil, dass dadurch das Dämmelement sowohl mit der ersten Seitenwand nach oben als auch mit der zweiten Seitenwand nach oben installiert werden kann, ohne dass sich dadurch ein anderes Expansionsverhalten ergibt. Dadurch können Manipulationsfehler bei der Installation ausgeschlossen bzw. reduziert werden.

In einer beispielhaften Ausführungsform haben die Seitenwände einen im Wesentlichen C- oder U-förmigen Querschnitt, wobei eine offene Seite dieses Querschnittes jeweils in Richtung der anderen Seitenwand ausgerichtet ist.

Eine solche Ausgestaltung hat den Vorteil, dass dadurch das expandierbare Material auch in Eckbereichen des Dämmelementes vor mechanischen Einwirkungen geschützt ist, und dass zudem eine gezielte Expansion senkrecht weg von der Zwischenwand erreicht werden kann.

In einer beispielhaften Ausführungsform umfasst das expandierbare Material ein erstes expandierbares Material und ein zweites expandierbares Material, wobei zwischen dem ersten expandierbaren Material und dem zweiten expandieraren Material die Zwischenwand des Trägers angeordnet ist.

In einer beispielhaften Weiterbildung bestehen das erste expandierbare Material und das zweite expandierbare Material aus derselben chemischen Zusammensetzung.

In einer alternativen Weiterbildung bestehen das erste expandierbare Material und das zweite expandierbare Material nicht aus derselben chemischen Zusammensetzung. Insbesondere können sich die Materialien bezüglich einer Expansionsrate unterscheiden.

In einer beispielhaften Ausführungsform ist ein Querschnitt des ersten expandierbaren Materiales senkrecht zur Längsachse kleiner als ein Querschnitt des zweiten expandierbaren Materiales senkrecht zur Längsachse.

Eine solche Ausgestaltung hat den Vorteil, dass dadurch eine Expansion auf einer Seite des Dämmelementes, welche vom Strukturelement (auf welchem das Dämmelement durch das Fixierungselement befestigt ist) abgewendet ist, stärker ausgebildet werden kann als auf einer dem Strukturelement zugewendeten Seite. Dadurch kann das expandierbare Material ökonomischer eingesetzt werden.

In einer beispielhaften Ausführungsform sind das erste expandierbare Material und das zweite expandierbare Material durch die zumindest eine Durchdringung hindurch miteinander verbunden.

Eine solche Ausgestaltung hat den Vorteil, dass dadurch eine Verbindung zwischen Träger und expandierbarem Material weiter verbessert werden kann.

In einer beispielhaften Ausführungsform hat das Dämmelement zumindest zwei Fixierungselemente zur Fixierung des Dämmelementes am Strukturelement.

In einer beispielhaften Ausführungsform ist das zumindest eine Fixierungselement als Nagel mit Widerhaken ausgebildet.

### Expandierbares Material

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate. Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffle^{®} 250 oder SikaBaffle^{®} 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispielsweise diejenigen bevorzugt, welche unter dem Handelsnamen SikaReinforcer^{®} 941 von der Sika Corp., USA, vertrieben werden. Diese sind beschrieben in US 6,387,470.

In einer beispielhaften Ausführungsform hat das expandierbare Material eine Expansionsrate von 800% bis 5000%, bevorzugt von 1000% bis 4000%, besonders bevorzugt von 1500% bis 3000%. Expandierbare Materialien mit solchen Expansionsraten bieten den Vorteil, dass dadurch eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum zu dämmen. Somit ist kein zusätzlicher Arbeitsschritt notwendig.

### Träger

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Der Träger kann durch verschiedene Verfahren hergestellt werden. In einer ersten Ausführungsvariante wird der Träger durch ein Spritzgussverfahren hergestellt. In einer zweiten Ausführungsvariante wird der Träger durch ein Extrusionsverfahren hergestellt. In einer dritten Ausführungsvariante wird der Träger durch ein additives Fertigungsverfahren hergestellt.

### Herstellungsverfahren

Die eingangs gestellte Aufgabe wird zudem gelöst durch ein Verfahren zur Herstellung eines Dämmelementes für die Dämmung eines Strukturelementes in einem Kraftfahrzeug, das Verfahren umfassend die Schritte: Bereitstellen eines Trägers, welcher eine Zwischenwand, eine erste Seitenwand und eine zweite Seitenwand hat, wobei sich die Wände des Trägers entlang einer gemeinsamen Längsachse erstrecken, und wobei der Träger in einer Ebene senkrecht zur Längsachse einen H-förmigen Querschnitt hat, bei welchem die ersten Seitenwand und die zweite Seitenwand jeweils an einem Ende der Zwischenwand angeordnet sind; Extrudieren eines ersten expandierbaren Materiales auf eine erste Seite der Zwischenwand des Trägers; und Extrudieren eines zweiten expandierbaren Materiales auf eine zweite Seite der Zwischenwand des Trägers.

In einer beispielhaften Ausführungsform laufen das Extrudieren des ersten expandierbaren Materiales und das Extrudieren des zweiten expandierbaren Materiales gleichzeitig in einem Co-Extrusionsverfahren ab.

Eine solcher Ablauf hat den Vorteil, dass dadurch das expandierbare Material in einem Arbeitsgang auf dem Träger angeordnet werden kann.

In einer beispielhaften Ausführungsform wird der Träger durch Extrusion ausgeformt.

Eine solches Verfahren hat den Vorteil, dass dadurch Träger und expandierbares Material beide durch Extrusion hergestellt werden, sodass das ganze Dämmelement in einem effizienten Verfahren und in einer Produktionslinie herstellbar ist.

In einer beispielhaften Ausführungsform wird nach einer Ausformung des Trägers zumindest eine Durchdringung in die Zwischenwand des Trägers gestanzt.

Eine solches Verfahren hat den Vorteil, dass dadurch eine Verbindung des expandierbaren Materiales durch die Zwischenwand hindurch ermöglicht wird, wodurch eine Verbindung zwischen Träger und expandierbarem Material verbessert wird.

In einer beispielhaften Ausführungsform wird das Fixierungselement von Hand durch das expandierbare Material und durch die Zwischenwand des Trägers getrieben.

In einer alternativen Ausführungsform wird das Fixierungselement maschinell durch das expandierbare Material und durch die Zwischenwand des Trägers getrieben.

In einer beispielhaften Ausführungsform ist das Fixierungselement durch eine Durchdringung der Zwischenwand des Trägers geführt.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2: eine schematische Darstellung eines beispielhaften Dämmelements; und
- Fig. 3: eine schematische Darstellung eines beispielhaften Trägers.

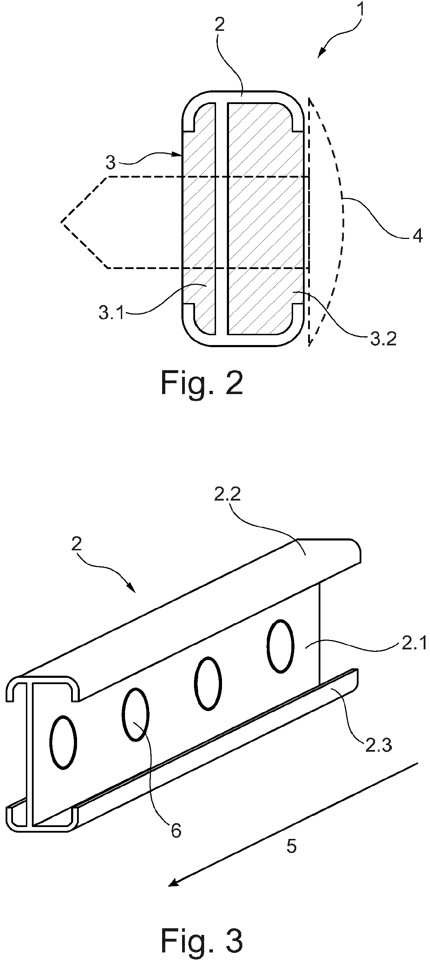

In Fig. 2 ist schematisch und beispielhaft ein Dämmelement 1 in einer Querschnittsdarstellung gezeigt. Das Dämmelement 1 hat einen Träger 2, expandierbares Material 3, und ein Fixierungselement 4. Das expandierbare Material 3 umfasst ein erstes expandierbares Material 3.1 und ein zweites expandierbares Material 3.2, welche beidseitig einer Zwischenwand des Trägers 2 angeordnet sind. Das Fixierungselement 4 ist sowohl durch den Träger 2 als auch durch das expandierbare Material 3 getrieben. In einem installierten Zustand (nicht dargestellt) ist das Fixierungselement 4 zudem durch eine dafür vorgesehene Öffnung in einem Strukturelement der Karosserie eingeführt.

In Fig. 3 ist schematisch und beispielhaft ein Träger 2 dargestellt. Der Träger 2 umfasst eine Zwisschenwand 2.1, eine erste Seitenwand 2.2 und eine zweite Seitenwand 2.3. Die Seitenwände 2.2, 2.3 haben einen C- oder U-förmigen Querschnitt, und sind spiegelsymmetrisch zueinander ausgebildet. Die Zwischenwand 2.1 hat mehrere kreisförmige Durchdringungen 6. Die Wände 2.1, 2.2, 2.3 des Trägers 2 erstrecken sich entlang einer Längsachse 5. Dabei bilden diese Wände 2.1, 2.2, 2.3 in einem Querschnitt, welcher senkrecht zur Längsachse 5 geführt wird, einen H-förmigen Querschnitt.

### Bezugszeichenliste

- 1: Dämmelement
- 2: Träger
- 2.1: Zwischenwand
- 2.2: ersten Seitenwand
- 2.3: zweite Seitenwand
- 3: expandierbares Material
- 3.1: erstes expandierbares Material
- 3.2: zweites expandierbares Material
- 4: Fixierungselement
- 5: Längsachse
- 6: Durchdringung
- 10: Karosserie
- 12: Strukturelement
- 14: Strukturelement
- 16: Abdichtungs- oder Verstärkungselement

## Patentansprüche

1. Dämmelement (1) zur Dämmung eines Strukturelementes in einem Kraftfahrzeug, das Dämmelement (1) umfassend:
einen Träger (2), welcher eine Zwischenwand (2.1), eine erste Seitenwand (2.2) und eine zweite Seitenwand (2.3) hat, wobei sich die Wände (2.1, 2.2, 2.3) des Trägers entlang einer gemeinsamen Längsachse (5) erstrecken, und wobei der Träger (2) in einer Ebene senkrecht zur Längsachse (5) einen H-förmigen Querschnitt hat, bei welchem die ersten Seitenwand (2.2) und die zweite Seitenwand (2.3) jeweils an einem Ende der Zwischenwand (2.1) angeordnet sind;
ein expandierbares Material (3), welches sowohl zwischen den Seitenwänden (2.2, 2.3) als auch beidseitig der Zwischenwand (2.1) angeordnet ist; und
zumindest ein Fixierungselement (4), welches sowohl den Träger (2) als auch das expandierbare Material (3) durchdringt und im Wesentlichen senkrecht zur Zwischenwand (2.1) des Trägers (2) angeordnet ist.

2. Dämmelement (1) nach Anspruch 1, wobei die Zwischenwand (2.1) zumindest eine Durchdringung (6) hat.

3. Dämmelement (1) nach Anspruch 2, wobei die Zwischenwand (2.1) mehrere Durchdringungen (6) hat, welche insbesondere in regelmässigen Abständen in Richtung der Längsachse (5) voneinander beabstandet sind.

4. Dämmelement (1) nach einem der Ansprüche 2 oder 3, wobei die zumindest eine Durchdringung (6) kreisförmig, oval oder elliptisch ist.

5. Dämmelement (1) nach einem der vorhergehenden Ansprüche, wobei die Seitenwände (2.2, 2.3) spiegelsymmetrisch zueinander ausgebildet sind.

6. Dämmelement (1) nach einem der vorhergehenden Ansprüche, wobei die Seitenwände (2.2, 2.3) einen im Wesentlichen C- oder U-förmigen Querschnitt haben, wobei eine offene Seite dieses Querschnittes jeweils in Richtung der anderen Seitenwand (2.2, 2.3) ausgerichtet ist.

7. Dämmelement (1) nach einem der vorhergehenden Ansprüche, wobei das expandierbare Material (3) ein erstes expandierbares Material (3.1) und ein zweites expandierbares Material (3.2) umfasst, wobei zwischen dem ersten expandierbaren Material (3.1) und dem zweiten expandieraren Material (3.2) die Zwischenwand (2.1) des Trägers (2) angeordnet ist.

8. Dämmelement (1) nach einem der vorhergehenden Ansprüche, wobei ein Querschnitt des ersten expandierbaren Materiales (3.1) senkrecht zur Längsachse (5) kleiner ist als ein Querschnitt des zweiten expandierbaren Materiales (3.2) senkrecht zur Längsachse (5).

9. Dämmelement (1) nach einem der Ansprüche 2 bis 8, wobei das erste expandierbare Material (3.1) und das zweite expandierbare Material (3.2) durch die zumindest eine Durchdringung (6) hindurch miteinander verbunden sind.

10. Dämmelement (1) nach einem der vorhergehenden Ansprüche, wobei das Dämmelement (1) zumindest zwei Fixierungselemente (4) zur Fixierung des Dämmelementes (1) am Strukturelement hat, und/oder wobei das zumindest eine Fixierungselement (4) als Nagel mit Widerhaken ausgebildet ist.

11. Verfahren zur Herstellung eines Dämmelementes (1) für die Dämmung eines Strukturelementes in einem Kraftfahrzeug, das Verfahren umfassend die Schritte:
Bereitstellen eines Trägers (2), welcher eine Zwischenwand (2.1), eine erste Seitenwand (2.2) und eine zweite Seitenwand (2.3) hat, wobei sich die Wände (2.1, 2.2, 2.3) des Trägers entlang einer gemeinsamen Längsachse (5) erstrecken, und wobei der Träger (2) in einer Ebene senkrecht zur Längsachse (5) einen H-förmigen Querschnitt hat, bei welchem die ersten Seitenwand (2.2) und die zweite Seitenwand (2.3) jeweils an einem Ende der Zwischenwand (2.1) angeordnet sind;
Extrudieren eines ersten expandierbaren Materiales (3.1) auf eine erste Seite der Zwischenwand (2.1) des Trägers (2); und
Extrudieren eines zweiten expandierbaren Materiales (3.2) auf eine zweite Seite der Zwischenwand (2.1) des Trägers (2).

12. Verfahren nach Anspruch 11, wobei das Extrudieren des ersten expandierbaren Materiales (3.1) und das Extrudieren des zweiten expandierbaren Materiales (3.2) gleichzeitig in einem Co-Extrusionsverfahren ablaufen.

13. Verfahren nach einem der Ansprüche 11 oder 12, wobei der Träger (2) durch Extrusion ausgeformt wird, und/oder wobei nach einer Ausformung des Trägers (2) zumindest eine Durchdringung (6) in die Zwischenwand (2.1) des Trägers (2) gestanzt wird.
